# EUROPEAN PATENT APPLICATION

(11) **EP 4 306 596 A2**
(43) Date of publication of application: **17.01.2024**
(21) Application number: 23185146.0
(22) Date of filing: 12.07.2023
(51) Int. Cl.: C08L 95/00

(54) **MEDIUM-LOW TEMPERATURE ASPHALT MODIFIER HAVING DEODORIZATION FUNCTION, ASPHALT MIXTURE PREPARED USING THE SAME, AND CONSTRUCTION METHOD THEREOF**

(30) Priority: 13.07.2022 KR 20220086434
(71) Applicant: Hansoo Natech Co., Ltd, Daejeon 34104 (KR)
(72) Inventor: Park, Joung Ho, 34033 Daejeon (KR); Lee, Nam Yeob, 34890 Daejeon (KR); Lee, Joug Yul, 34120 Daejeon (KR)
(74) Representative: Stolmár & Partner Patentanwälte PartG mbB

(57) **Abstract**

Provided are a high-strength medium-low temperature asphalt modifier including: i) a styrenic thermoplastic elastomer powder which is frozen ground to 0.1 to 1 mm at a low temperature, wherein the styrenic thermoplastic elastomer is selected from a polystyrene-polybutadiene-polystyrene block copolymer (SBS), a styrene-butadiene rubber (SBR), a styreneisoprene-styrene block copolymer (SIS), a styrene-ethylenebutylene-styrene block copolymer (SEBS), and a styrenic thermoplastic elastomer (STE), ii) a high-boiling point process oil, iii) a rosin resin tackifier modified by an aliphatic hydrocarbon, iv) a polymer-silica nanocomposite, and v) an asphalt deodorant, an asphalt mixture prepared using the same, and a construction method thereof.

## Description

### CROSS-REFERENCE TO RELATED APPLICATIONS

This application claims priority under 35 U.S.C. §119 to Korean Patent Application No. 10-2022-0086434, filed on 07. 13, 2022, in the Korean Intellectual Property Office, the disclosure of which is incorporated herein by reference in its entirety.

### TECHNICAL FIELD

The present disclosure relates to a medium-low temperature asphalt modifier which allows preparation of an asphalt mixture at a medium-low temperature of 140°C or lower, preferably 120°C or lower, and more preferably 100°C or lower, though a preparation temperature of an asphalt mixture is conventionally 160°C or higher or 180°C or higher, and has a deodorization function and imparts high strength properties to provide high strength and deodorizing properties to the prepared asphalt mixture.

In addition, the present disclosure relates to an asphalt mixture prepared using the asphalt modifier and a construction method thereof.

In particular, the present disclosure relates to a high-strength medium-low temperature asphalt modifier which lowers a conventional production temperature of an asphalt mixture by 40 to 60°C or more to allow production of an asphalt mixture even at a low temperature, and thus, decreases energy and carbon emission by 60% or more, an asphalt mixture prepared using the same, and a construction method thereof.

### BACKGROUND

Since asphalt pavement makes less road noise and is rapidly constructed and cured as compared with concrete pavement, it is often used in road pavement. Asphalt pavement is constructed using paving equipment and compaction equipment after an asphalt mixture in which straight asphalt is mixed with aggregates, fillers, and the like is produced in a plant and then transported to the site.

In the plant which produces the asphalt mixture, the asphalt mixture is generally produced at a high temperature of 160 to 180°C, and thus, energy consumption is high, and in particular, carbon dioxide emission is high. In order to create a safe and sustainable society in response to the climate crisis, South Korea declared carbon neutrality in 2021 with the goal of reducing greenhouse gas emissions by 2050, and considering the reality that all industries are participating in this, carbon dioxide produced in the manufacture of the asphalt mixture needs to be reduced.

In recent years, medium temperature asphalt which may reduce energy and carbon dioxide emission by about 20% or more by lowering a production energy by 20 to 30°C during the production of the asphalt mixture has been studied, but when the production temperature of the asphalt mixture is lowered by about 20 to 30°C, aggregates are not dried so that moisture remains in the asphalt mixture. When the moisture is not dried in the aggregates, an asphalt binder (straight asphalt) which is the main material of the asphalt mixture has weak resistance to moisture, so that a binding force and adhesion to aggregates are greatly reduced, which is the main cause of poor packaging commonality such as cracks, potholes, and plastic deformation after pavement construction.

In order to solve the problem, Korean Patent Publication No. 1594070 provides a medium temperature asphalt additive including a surfactant, distilled water, and vegetable palm oil and a method of preparing an asphalt mixture, but since penetration of oil into asphalt is increased by the use of oil, it is vulnerable to cracks and deformation at high temperatures in summer, and in the case of wax, it has increased brittleness at a low temperature, so that pavement damage is increased due to asphalt cracking at low temperatures. In addition, considering the reality that reduction of carbon dioxide emission and energy by 60% or more is required for realizing carbon neutrality, it needs to be improved.

### SUMMARY

An embodiment of the present disclosure is directed to providing a medium-low temperature asphalt modifier which provides an asphalt mixture having high strength properties which may lower a production temperature of an asphalt mixture by 40 to 60°C or more in a plant producing an asphalt mixture to implement carbon neutrality by energy conservation and carbon dioxide emission suppression.

Preferably, an embodiment of the present disclosure is directed to providing a high-strength medium-low temperature asphalt modifier which may produce an asphalt mixture at 120°C or lower in a plant producing an asphalt mixture, in which the produced asphalt mixture has excellent Marshall stability and excellent dynamic stability, may be deodorized, reduces carbon dioxide emission, may save energy, and has high strength properties.

Another embodiment of the present disclosure is directed to providing a high-strength medium-low temperature asphalt modifier which may remove hydrogen sulfide which is the main cause of odor during asphalt production by 99% or more, and may decompose and adsorb mercaptan-based and aldehyde-based harmful gases to improve workers and surroundings in asphalt plants and construction sites.

Still another embodiment of the present disclosure is directed to providing a high-strength medium-low temperature asphalt modifier which may increase pavement commonality such as plastic deformation resistance at high temperatures in summer, fatigue crack resistance at low temperatures in winter, moisture resistance, and asphalt oxidation resistance, together with its unique function to lower the production temperatures of an asphalt mixture, and an asphalt mixture including the same.

In one general aspect, a high-strength medium-low temperature asphalt modifier includes: i) a styrenic thermoplastic elastomer powder, ii) a composite process oil, iii) a rosin resin tackifier modified by an aliphatic hydrocarbon, iv) a polymer-silica nanocomposite, and v) an asphalt deodorant.

In an exemplary embodiment of the present disclosure, preferably, a high-strength medium-low temperature asphalt modifier including: i) 30 to 60 parts by weight of the styrenic thermoplastic elastomer powder, ii) 40 to 60 parts by weight of the composite process oil, iii) 5 to 20 parts by weight of the rosin resin tackifier modified by an aliphatic hydrocarbon, iv) 0.2 to 5 parts by weight of the polymer-silica nanocomposite, and v) 0.01 to 0.5 parts by weight of the asphalt deodorant is provided.

In an exemplary embodiment of the present disclosure, the styrenic thermoplastic elastomer may be one or two or more selected from a polystyrene-polybutadiene-polystyrene block copolymer (SBS), a styrene-butadiene rubber (SBR), a styrene-isoprene-styrene block copolymer (SIS), a styrene-ethylene-butylene-styrene block copolymer (SEBS), a styrenic thermoplastic elastomer (STE), and the like.

In an exemplary embodiment of the present disclosure, the styrenic thermoplastic elastomer powder may be a polystyrene-polybutadiene-polystyrene block copolymer (SBS) powder.

In an exemplary embodiment of the present disclosure, the composite process oil may be prepared by mixing 5 to 20 parts by weight of a polybutene or polyisoprene liquid polymer with respect to 100 parts by weight of a process oil such as a paraffin oil. An example of the product includes a product such as R10 available from GTR in which 15 parts by weight of liquid polyisoprene is mixed with respect to 100 parts by weight of paraffin oil, but is not limited thereto.

In an exemplary embodiment of the present disclosure, the polymer-silica nanocomposite may be a composite prepared by mixing nanosilica and a polymer resin. As an example of the polymer-nanosilica, the polymer-nanosilica including 10 to 20 wt% of nanoclay such as bentonite; 75 to 88 wt% of nanosilica fume; and 2 to 5 wt% of a nano super absorbent polymer (for example, SAP from LG Chem as a polyacrylic acid-crosslinked product) is preferred since the purpose of the present disclosure may be better achieved, but is not limited thereto.

In an exemplary embodiment of the present disclosure, the asphalt deodorant may include 10 to 30 wt% of an essential oil having a harmful gas decomposition and absorption function; 20 to 40 wt% of an essential oil having ion exchange and reactivity; 20 to 40 wt% of a carrier oil; and 30 to 40 wt% of a composite process oil. An example of the deodorant may include a product such as Asmell cut available from Hansoo Road Ind.

In another general aspect, an asphalt mixture includes: 80 to 96.9 wt% of aggregates; 3 to 10 wt% of asphalt; and 0.1 to 10 wt% of the high-strength medium-low temperature asphalt modifier.

In an exemplary embodiment of the present disclosure, when the asphalt mixture is prepared in a range of 110°C±15°C, the medium-low temperature asphalt modifier may provide an asphalt mixture which may reduce carbon emission by 60% or more as compared with an asphalt mixture which does not include the high-strength medium-low temperature asphalt modifier.

In an exemplary embodiment of the present disclosure, the aggregates may be 90-100% of a 13 mm sieve, 76-90% of a 10 mm sieve, 44-74% of a 5 mm sieve, 28-58% of a 2.5 mm sieve, 11-32% of a 0.6 mm sieve, 5-21% of a 0.3 mm sieve, 3-15% of a 0.15 mm sieve, and 2-10% of a 0.08 mm sieve, based on a weight percentage passing through the sieve of WC-1 particle size.

In an exemplary embodiment of the present disclosure, the aggregates may be 95-100% of a 13 mm sieve, 84-92% of a 10 mm sieve, 55-70% of a 5 mm sieve, 35-50% of a 2.5 mm sieve, 18-30% of a 0.6 mm sieve, 10-21% of a 0.3 mm sieve, 6-16% of a 0.15 mm sieve, and 4-8% of a 0.08 mm sieve, based on a weight percentage passing through the sieve of WC-2 particle size.

In an exemplary embodiment of the present disclosure, the aggregates may be 90-100% of a 20 mm sieve, 72-90% of a 13 mm sieve, 56-80% of a 10 mm sieve, 35-65% of a 5 mm sieve, 23-49% of a 2.5 mm sieve, 10-28% of a 0.6 mm sieve, 5-19% of a 0.3 mm sieve, 3-13% of a 0.15 mm sieve, and 2-8% of a 0.08 mm sieve, based on a weight percentage passing through the sieve of WC-3 particle size.

In an exemplary embodiment of the present disclosure, the aggregates may be 95-100% of a 20 mm sieve, 75-90% of a 13 mm sieve, 67-84% of a 10 mm sieve, 45-65% of a 5 mm sieve, 35-50% of a 2.5 mm sieve, 18-30% of a 0.6 mm sieve, 10-21% of a 0.3 mm sieve, 6-16% of a 0.15 mm sieve, and 4-8% of a 0.08 mm sieve, based on a weight percentage passing through the sieve of WC-4 particle size.

In an exemplary embodiment of the present disclosure, the aggregates may be 90-100% of a 20 mm sieve, 69-84% of a 13 mm sieve, 56-74% of a 10 mm sieve, 35-55% of a 5 mm sieve, 23-38% of a 2.5 mm sieve, 10-23% of a 0.6 mm sieve, 5-16% of a 0.3 mm sieve, 3-12% of a 0.15 mm sieve, and 2-10% of a 0.08 mm sieve, based on a weight percentage passing through the sieve of WC-5 particle size.

In an exemplary embodiment of the present disclosure, the aggregates may be 90-100% of a 13 mm sieve, 73-90% of a 10 mm sieve, 40-60% of a 5 mm sieve, 25-40% of a 2.5 mm sieve, 11-22% of a 0.6 mm sieve, 7-16% of a 0.3 mm sieve, 4-12% of a 0.15 mm sieve, and 3-9% of a 0.08 mm sieve, based on a weight percentage passing through the sieve of WC-6 particle size.

In an exemplary embodiment of the present disclosure, the aggregates may be 90-100% of a 20 mm sieve, 45-85% of a 13 mm sieve, 27-73% of a 10 mm sieve, 5-40% of a 5 mm sieve, 5-32% of a 2.5 mm sieve, 5-32% of a 0.6 mm sieve, 5-32% of a 0.3 mm sieve, 5-32% of a 0.15 mm sieve, and 1-15% of a 0.8 mm sieve, based on a weight percentage passing through the sieve of low noise drainage pavement.

In an exemplary embodiment of the present disclosure, the aggregates may be 85-100% of a 13 mm sieve, 57-92% of a 10 mm sieve, 5-43% of a 5 mm sieve, 5-32% of a 2.5 mm sieve, 5-32% of a 0.6 mm sieve, 5-32% of a 0.3 mm sieve, 5-32% of a 0.15 mm sieve, and 1-15% of a 0.08 mm sieve, based on a weight percentage passing through the sieve of low noise drainage pavement.

In an exemplary embodiment of the present disclosure, the aggregates may be 76-100% of a 8 mm sieve, 21-76% of a 5 mm sieve, 5-42% of a 2.5 mm sieve, 2-21% of a 0.6 mm sieve, 1-20% of a 0.3 mm sieve, 1-19% of a 0.15 mm sieve, and 1-16% of a 0.08 mm sieve, based on a weight percentage passing through the sieve of low noise drainage pavement.

In an exemplary embodiment of the present disclosure, the aggregates may be 70-100% of a 5 mm sieve, 10-63% of a 2.5 mm sieve, 6-31% of a 0.3 mm sieve, and 1-17% of a 0.08 mm sieve, based on a weight percentage passing through the sieve of low noise drainage pavement.

In an exemplary embodiment of the present disclosure, the aggregates may be 80-100% of a 13mm sieve, 40-95% of a 10 mm sieve, 20-70% of a 5 mm sieve, 10-60% of 2.5 mm sieve, 5-35% of a 1.2 mm sieve, 3-32% of a 0.3 mm sieve, and 1-25% of a 0.08 mm sieve, based on a weight percentage passing through the sieve of 13 mm low noise dense-graded pavement.

In an exemplary embodiment of the present disclosure, the aggregates may be 85-100% of a 10 mm sieve, 25-70% of a 5 mm sieve, 10-50% of a 2.5 mm sieve, 5-25% of a 1.2 mm sieve, 2-20% of a 0.3 mm sieve, and 1-15% of a 0.08 mm sieve, based on a weight percentage passing through the sieve of 10 mm low noise dense-graded pavement.

In an exemplary embodiment of the present disclosure, the aggregates may be 85-100% of a 5 mm sieve, 65-85% of a 2.5 mm sieve, 5-25% of a 1.2 mm sieve, 15-35% of a 0.3 mm sieve, and 4-13% of a 0.08 mm sieve, based on a weight percentage passing through the sieve of 5 mm low noise dense-graded pavement.

In an exemplary embodiment of the present disclosure, the aggregates may include 0.0001-1000 of a recycled aggregate.

In still another general aspect, a construction method of asphalt pavement includes: A) producing an asphalt mixture; B) transporting the asphalt mixture; C) paving the asphalt mixture; and D) compacting an asphalt pavement layer.

The compacting may include compacting in multiple stages at different temperatures.

The compacting of the construction method of asphalt pavement may include first compacting at 100±10°C, second compacting at 90±10°C, and third compacting at 80±10°C of the pavement layer.

Preferably, in an exemplary embodiment of the present disclosure, the construction method of asphalt pavement may include: A) producing an asphalt mixture at 110±10°C; B) transporting the asphalt mixture at 110±10°C; C) paving the asphalt mixture at 110±10°C; D) first compacting an asphalt pavement layer at 100±10°C; E) second compacting the asphalt pavement layer at 90±10°C; and F) third compacting the asphalt pavement layer at 80±10°C.

Other features and aspects will be apparent from the following detailed description, the drawings, and the claims.

### DETAILED DESCRIPTION OF EMBODIMENTS

The term "asphalt mixture" herein refers to a state in which an aggregate and asphalt are mixed before being paved and compacted on a road, the terms "asphalt mixture" and "asphalt concrete mixture" are used interchangeably in order to mean the ranges of the composition and the method which are considered and described in the present application.

The term "asphalt binder" herein refers to an asphalt component itself such as straight asphalt, and "modified asphalt binder" is a mixture of the asphalt binder and the asphalt modifier of the present disclosure and used as a term which is distinguished from the asphalt mixture including the aggregate.

The term "medium-low temperature asphalt modifier" or "high-strength medium-low temperature asphalt modifier" herein, which is an additive added to the asphalt mixture, refers to an asphalt modifier which allows the asphalt mixture to be prepared at a medium-low preparation temperature of 140°C or lower, preferably 120°C or lower, and more preferably 100°C or lower, and may improve mechanical and dynamic properties such as crack resistance and deformation resistance at a high temperature of paved asphalt.

Hereinafter, the configuration of the present disclosure will be described in more detail with reference to the specific exemplary embodiment.

However, it is apparent to a person with ordinary skill in the art to which the present disclosure pertains that the scope of the present disclosure is not limited to the description of the exemplary embodiment.

The medium-low temperature asphalt modifier of the present disclosure decomposes and adsorbs substances which are the main cause of an asphalt odor such as hydrogen sulfide to have a deodorization function, and also allows production of a high-strength asphalt mixture at a medium-low temperature.

An exemplary embodiment of the present disclosure provides a high-strength medium-low temperature asphalt modifier includes: i) a styrenic thermoplastic elastomer powder, ii) a composite process oil, iii) a rosin resin tackifier modified by an aliphatic hydrocarbon, iv) a polymer-silica nanocomposite, and v) an asphalt deodorant.

Preferably, an exemplary embodiment of the present disclosure provides a high-strength medium-low temperature asphalt modifier including: i) 30 to 60 parts by weight of the styrenic thermoplastic elastomer powder, ii) 40 to 60 parts by weight of the composite process oil, iii) 5 to 20 parts by weight of the rosin resin tackifier modified by an aliphatic hydrocarbon, iv) 0.2 to 5 parts by weight of the polymer-silica nanocomposite, and v) 0.01 to 0.5 parts by weight of the asphalt deodorant.

More specifically, a high-strength medium-low temperature asphalt modifier including: i) 30 to 60 parts by weight of the styrenic thermoplastic elastomer powder which is frozen grinding to 0.1 to 1 mm at a low temperature, ii) 40 to 60 parts by weight of the composite process oil, iii) 5 to 20 parts by weight of the rosin resin tackifier modified by an aliphatic hydrocarbon, iv) 0.2 to 5 parts by weight of the polymer-silica nanocomposite, and v) 0.01 to 0.5 parts by weight of the asphalt deodorant may be provided.

In the present disclosure, the styrenic thermoplastic elastomer may be one or two or more in combination selected from a polystyrene-polybutadiene-polystyrene block copolymer (SBS), a styrene-butadiene rubber (SBR), a styrene-isoprene-styrene block copolymer (SIS), a styrene-ethylene-butylene-styrene block copolymer (SEBS), and a styrenic thermoplastic elastomer (STE).

In an exemplary embodiment of the present disclosure, the styrenic thermoplastic elastomer powder may be a polystyrene-polybutadiene-polystyrene block copolymer (SBS) powder.

Hereinafter, components of the high-strength medium-low temperature asphalt modifier will be described in detail.

### <Styrenic thermoplastic elastomer powder>

The styrenic thermoplastic elastomer powder in the present disclosure is for increasing a specific surface area and an absorption rate, and is in a powder form. A method of preparing the powder is not particularly limited, but for example, includes frozen grinding at a low temperature into a powder form having a size of 0.1 to 1 mm. The frozen grinding is a material powdering method using low temperature brittleness in which when a material is cooled to a certain low temperature or lower, it loses elasticity and stickiness and becomes hard and brittle like glass. As an exemplary embodiment, the styrenic thermoplastic elastomer is cooled to -5°C to -20°C and then crushed and shredded to be powdered to a uniform particle size.

The styrenic thermoplastic elastomer may be selected from a polystyrene-polybutadiene-polystyrene block copolymer (SBS), a styrene-butadiene rubber (SBR), a styrene-isoprene-styrene block copolymer (SIS), a styrene-ethylene-butylene-styrene block copolymer (SEBS), and a styrene-based thermoplastic elastomer (STE), but preferably, may be a polystyrene-polybutadiene-polystyrene block copolymer (SBS), and may be one or mixed powder of two or more. In the present disclosure, it is more preferred to use the polystyrene-polybutadiene-polystyrene block copolymer (SBS) as the styrene thermoplastic elastomer since deformation resistance and brittle properties at a low temperature of the asphalt binder may be improved, but the present disclosure is not limited thereto.

In the case of adjusting the size of the powder of the present disclosure to 0.01 to 1 mm, when the asphalt mixture is prepared at 120°C or lower which is lowered from the production temperature by 40 to 60°C, the asphalt mixture has high fineness and specific surface area, and thus, a high absorption rate for a composite process oil. Therefore, 40% or more of the composite process oil included in the high-strength medium-low temperature asphalt modifier may be dipped in the styrenic thermoplastic elastomer.

In general, a melting temperature of the polystyrene-polybutadiene-polystyrene block copolymer (SBS) is high in a range of about 170 to 180°C, but when a high content of 40% or more of the composite process oil is dipped in the polystyrene-polybutadiene-polystyrene block copolymer (SBS) in the present disclosure, melting at a lower temperature is allowed in an asphalt plant, and thus, eventually, it was found that the asphalt mixture may be produced at a temperature lowered by 40 to 60°C or more.

In the present disclosure, the styrenic thermoplastic elastomer powder may be included at 30 to 60 wt% with respect to 100 wt% of the high-strength medium-low temperature asphalt modifier, and preferably, the polystyrene-polybutadiene-polystyrene block copolymer (SBS) powder which is frozen ground to 0.1 to 1 mm at a low temperature may be included at 30 to 60 wt%. When less than 30 wt% of the polystyrene-polybutadiene-polystyrene block copolymer (SBS) powder is used, it is difficult to secure the grade of the high-strength medium-low temperature asphalt modifying binder of PG 76-22 or more, and when more than 60 wt% is used, the asphalt mixture may not be produced at a temperature of 100°C or lower, which are not good, and thus, the above range is preferred.

### <Composite process oil>

In the present disclosure, a composite process oil is used for dissolving the styrenic thermoplastic elastomer powder.

In the conventional asphalt modifier, wax or vegetable oil is added for lowering the viscosity of the asphalt mixture. However, it was found that since the wax has strong brittleness at a low temperature, asphalt cracks increase at low temperatures in winter, and since the vegetable oil increases softness and oxidation of the asphalt binder, asphalt pavement deformation is greatly increased at high temperatures in summer.

Thus, in the present disclosure, the use of wax and vegetable oil is excluded and a composite process oil is adopted and used as a component of the asphalt modifier.

The composite process oil in the present disclosure may be used at 40 to 60 wt% with respect to 100 wt% of the high-strength low-temperature asphalt modifier. When the content of the composite process oil is less than 40 wt%, the production temperature of the asphalt mixture may not be lowered to 100°C, and when it is used at 60 wt% or more, the content of the polystyrene-polybutadiene-polystyrene block copolymer (SBS) is excessively lowered so that the commonality rating (PG) of the high-strength low-temperature asphalt may not be 76-22 or more, which is thus not preferred.

In the present disclosure, when the composite process oil is used as the component of the asphalt modifier, the melting degree of the styrenic thermoplastic elastomer powder at 100°C or lower is raised and high softening and oxidation of the asphalt binder may be prevented, which is thus preferred.

An example of the composite process oil may be a mixture of 5 to 20 parts by weight of polybutene or polyisoprene liquid polymer with respect to 100 parts by weight of the process oil, but is not limited as long as the purpose of the present disclosure is achieved. As the process oil, naphthene-based, paraffin-based, aromatic-based oils, and the like may be used. Also, an example of the commercialized composite process oil may be a product such as R10 available from GRT.

In an exemplary embodiment of the present disclosure, polybutene and polyisoprene may form a crosslink with an asphalt binder in the asphalt mixture, with the polystyrene-polybutadiene-polystyrene block copolymer (SBS), by the process oil. The crosslinked asphalt binder may prevent excessive softening and oxidation at a high temperature, suppress brittleness of asphalt at a low temperature, and improve adhesion to an aggregate to improve the commonality of the asphalt pavement. The crosslinking may be crosslinking of a double bond of each component by heat during the preparation of the asphalt mixture.

### <Rosin resin tackifier modified by aliphatic hydrocarbon>

The present disclosure uses a rosin resin tackifier modified by an aliphatic hydrocarbon for increasing adhesion between the asphalt binder and the aggregate and improving adhesive strength of the asphalt binder.

When the production temperature of the asphalt mixture is lowered by 40 to 60°C or more, the aggregate is not completely dried as compared with common asphalt, and thus, the adhesion between the asphalt binder and the aggregate may be greatly deteriorated by moisture present in the aggregate.

In addition, it was found that a tackifier such as rosin, a waterborne rosin derivative, a disproportionated rosin derivative, a dualized rosin derivative, an acid-added rosin derivative, an esterified rosin derivative, a terpene resin, a terpene phenol resin, an aromatic modified terpene resin, a hydrogenated terpene resin, aliphatic (C5), aromatic (C9), C5/C9 copolymers, alicyclic, phenol, xylene, a coumarone-indene resin, and a ketone resin which are mainly used in the preparation of a general asphalt modifier shows adhesion at a high temperature of 150°C or higher. Therefore, it was found to be inappropriate to use the tackifiers as a component of the tackifier in a low-temperature asphalt mixture of the present disclosure to produce asphalt at about 100°C. As the tackifier, there are many commercialized products, for example, Kolon P-120HS.

Therefore, in the present disclosure, when a rosin resin tackifier which has high adhesion to an aggregate containing moisture in the production of a high-strength medium-low temperature asphalt mixture and also has high adhesion to the asphalt binder and the aggregate even at a low temperature of 100°C or lower is used, adhesion between the asphalt binder and the aggregate is increased, and excellent mechanical properties or resistance to strong brittleness may be imparted even when the asphalt mixture is produced at a low temperature.

In the present disclosure, the rosin resin modified by the aliphatic hydrocarbon may be prepared by a step of synthesizing a rosin polyol (or glycerin) ester by an esterification reaction of rosin and polyol, a step of synthesizing a rosin resin modified by an aliphatic compound by a reaction of the rosin polyol ester and a monomer material, and a step of removing an unreacted monomer by vacuum stripping the aliphatic modified rosin resin.

The polyol and a polyol for the esterification reaction of rosin may be one or more of triethylene glycol, diethylene glycol, pentaerythritol, glycerol, sorbitol, trimethanolpropane, 1,4-cyclohexane dimethanol, 1,4-butanediol, and ethylene glycol, but are not limited thereto.

In addition, the monomer material for synthesizing an aliphatic modified rosin resin by a reaction of the rosin polyol ester and the monomer material may include C6-C22 α-olefin, a monomer having a vinyl end group, a C6-C22 α-β unsaturated ester and acid, or one or more of acrylic acid esters of C4-C22 aliphatic chain or ring may be used, but is not limited thereto.

The rosin resin tackifier modified by an aliphatic hydrocarbon in the present disclosure may be used at 5 to 20 wt% with respect to 100 wt% of the medium-low temperature asphalt modifier, but is not limited as long as the purpose of the present disclosure is achieved. When the rosin resin tackifier modified by an aliphatic hydrocarbon is used at less than 5 wt% in the present disclosure, adhesion to an aggregate including 2% or more of a moisture content is decreased, and when it is used at more than 20 wt%, the melting point of the high-strength medium-low temperature asphalt mixture is raised to require a production temperature of 140°C or higher, which is thus not preferred.

### <Polymer-silica nanocomposite>

In the present disclosure, in order to improve moisture resistance and oxidation resistance of the high-strength low-temperature asphalt, a polymer-silica nanocomposite is included.

The polymer-silica nanocomposite may include 10 to 20 wt% of nanoclay having a size of 1 to 100 um having an ion exchange volume of 50 to 200 meq/g and an active specific surface area of 500 to 1,000 m²/g, 75 to 88 wt% of nanosilica fume of 1 to 100um having an ion exchange volume of 10 to 50 meq/g and an active specific surface area of 20 to 5,000 m²/g, and 2 to 5 wt% of the super absorbent polymer (SAP).

Since the nanoclay has a large plate structure, when it forms a nanocomposite with a polymer, a contact area between the clay and the polymer is increased, thereby greatly increasing a filling effect as compared with a conventional composite. In addition, in the preparation of the high-strength low-temperature asphalt modifier, a polymer-silica nanocomposite having an intercalated structure is formed, so that a polymer chain is inserted into an interlayer space of the clay to form a structure having increased interlayer spacing.

In addition, the nanoclay is randomly arranged between asphaltene and maltene of the asphalt binder, whereby the tensile strength and the tensile modulus of the asphalt binder are increased, and a bond chain (chemical bonding) is formed in the asphalt binder, and thus, the nanoclay may improve crack resistance at a high temperature with ductile behavior. In addition, since the nanoclay independently forms a silicate layer, the oxidation prevention effect of asphalt is excellent through oxygen penetration prevention and inhibition of evaporation of volatile components in the asphalt binder. In particular, since the active specific surface area is large, moisture included in the aggregate is absorbed during production of the high-strength medium-low temperature asphalt mixture, thereby having an excellent effect of improving moisture resistance of the asphalt binder.

Since the nanosilica fume has a spherical surface structure unlike the nanoclay and has excellent dispersibility and a large active specific surface area, the coated thickness of the aggregate may be increased by the increased viscosity of the asphalt binder. In addition, the nanosilica fume is randomly distributed in the asphalt binder and has excellent effects of improving the toughness properties of the asphalt binder and preventing asphalt oxidation.

The super absorbent polymer (SAP) is a crosslinked polymer electrolyte which is produced by partial neutralization of polyacrylic acid with caustic soda, and may absorb 500 times or more surrounding water in a dried state. The super absorbent polymer instantly absorbs moisture included in an undried aggregate in the high-strength medium-low temperature asphalt which lowers the production temperature of the asphalt mixture by 40 to 60°C, thereby being effective for improving adhesion between asphalt and aggregate. In particular, the polymer-silica nanocomposite including nanoclay, nanosilica fume, and a super absorbent polymer absorbs moisture in the undried aggregate at the same time to block a moisture contact of asphalt, thereby improving moisture resistance of asphalt. In addition, the moisture absorbed in the super absorbent polymer is bound to the nanoclay and the nanosilica fume by electrostatic interaction and coulombic interaction to form a plastic solid and improve the toughness properties of asphalt.

The polymer-silica nanocomposite of the present disclosure is used at 0.2 to 5 wt% with respect to 100 wt% of the high-strength medium-low temperature asphalt modifier. When less than 0.2 wt% of the polymer-silica nanocomposite is used, oxidation of asphalt in which 40% or more of the composite process oil is dipped may not be suppressed, and when more than 5 wt% is used, a compaction degree may be lowered at a low temperature due to an excessive viscosity increase, and thus, the above range is preferred.

### <Asphalt deodorant>

The present disclosure includes an asphalt deodorant to remove harmful substances such as hydrogen sulfide, methyl mercaptan, acetaldehyde, butyraldehyde, and the like which may occur in production of the asphalt mixture and construction on site.

The asphalt deodorant of the present disclosure may include 10 to 30 wt% of an essential oil having harmful gas decomposition and absorption performance; 20 to 40 wt% of an essential oil having ion exchange and reactivity; 20 to 40 wt% of a carrier oil, and 30 to 40 wt% of a composite process oil.

The asphalt deodorant of the present disclosure may be used for removing harmful substances such as hydrogen sulfide, methyl mercaptan, acetaldehyde, and butyraldehyde which are the main cause of odor in the production of the asphalt mixture.

As the essential oil having harmful gas decomposition and absorption performance, one or more of pine essential oil, red pine essential oil, pine needle essential oil, cypress essential oil, cedar essential oil, and eucalyptus essential oil may be used, but it is not limited thereto. The essential oil having harmful gas decomposition and absorption performance decomposes odor causing substances and absorbs gas molecules by a physical filling action using van der Waals on the surface of fine pores composed of a molecular layer to prevent their leaking into the air.

Since it is difficult to remove 100% of the unique asphalt odor only with the essential oil having harmful gas decomposition and absorption performance, the present disclosure further includes an essential oil having ion exchange and reactivity.

As the essential oil having ion exchange and reactivity, one or more of jasmine essential oil, geranium essential oil, thyme essential oil, lime essential oil, lavender essential oil, tea tree essential oil, lemon essential oil, rose essential oil, and rosemary essential oil may be used, but is not limited thereto.

The essential oil having ion exchange and reactivity removes or modifies an odor-causing substance by reversible ion exchange between ion and harmful substance present in the oil and promotes chemical phase transition with the odor eliminator to prevent leakage of the odor-causing substance.

When among the essential oils having ion exchange and reactivity, a vegetable essential oil is used as a high-concentrated oil, odor decomposition ad absorption is excellent with the use of a small amount, but, in contrast, the scent of the oil itself is strong and the oil may become another odor-causing substance, and thus, it is important to use the oil after diluting it.

In the present disclosure, a carrier oil is included for dilution and dispersibility of the asphalt deodorant. As the carrier oil, one or more of jojoba, olive, argan, grapeseed, rosehip, coconut, almond, avocado, calendula, and canola oil may be used, but it is not limited thereto.

In the present disclosure, the asphalt deodorant may be included at 0.01 to 5 wt% with respect to 100 wt% of the total high-strength medium-low temperature asphalt modifier. When less than 0.01 wt% of the asphalt deodorant is used, the asphalt odor may not be removed 100%, and when more than 5 wt% of the asphalt deodorant is used, secondary odor due to the essential oil may be caused.

Another exemplary embodiment of the present disclosure provides an asphalt mixture including: 80 to 96.9 wt% of aggregates; 3 to 10 wt% of asphalt, and 0.1 to 10 wt% of the medium-low temperature asphalt modifier.

The asphalt mixture decreases the carbon emission of a common asphalt concrete mixture by 60% or more during the preparation in a range of 110°C±15°C. When the content of asphalt in the asphalt mixture is less than 3 wt%, sufficient strength may not be expressed with a decreased coated thickness of the aggregate, and when the content is more than 10 wt%, the physical performance of the asphalt mixture may be deteriorated by the drain of the asphalt binder.

When the content of the aggregates is less than 80 wt%, a pothole, a deformation, or the like may occur due to the softening of pavement at high temperatures in summer with an excessive content of asphalt. In addition, when the content of the aggregates is more than 96.9 wt%, cracks, aggregate detachment, or the like occur with a decreased binding force of the binder due to the lack of the content of asphalt.

When the content of the high-strength medium-low temperature asphalt modifier according to the present disclosure is less than 0.1 wt%, the production temperature of the asphalt mixture may not be lowered by 40 to 60°C, and when it is more than 10 wt%, the viscosity of the asphalt binder is too low, so that the asphalt mixture may not be produced.

The aggregates of the present disclosure may be 90-100% of a 13 mm sieve, 76-90% of a 10 mm sieve, 44-74% of a 5 mm sieve, 28-58% of a 2.5 mm sieve, 11-32% of a 0.6 mm sieve, 5-210 of a 0.3 mm sieve, 3-15% of a 0.15 mm sieve, and 2-10% of a 0.08 mm sieve, based on a weight percentage passing through the sieve of WC-1 particle size.

The aggregates of the present disclosure may be 95-100% of a 13 mm sieve, 84-92% of a 10 mm sieve, 55-70% of a 5 mm sieve, 35-50% of a 2.5 mm sieve, 18-30% of a 0.6 mm sieve, 10-210 of a 0.3 mm sieve, 6-16% of a 0.15 mm sieve, and 4-8% of a 0.08 mm sieve, based on a weight percentage passing through the sieve of WC-2 particle size.

The aggregates of the present disclosure may be 90-100% of a 20 mm sieve, 72-90% of a 13 mm sieve, 56-80% of a 10 mm sieve, 35-65% of a 5 mm sieve, 23-49% of a 2.5 mm sieve, 10-28% of a 0.6 mm sieve, 5-19% of a 0.3 mm sieve, 3-13% of a 0.15 mm sieve, and 2-8% of a 0.08 mm sieve, based on a weight percentage passing through the sieve of WC-3 particle size.

The aggregates of the present disclosure may be 95-100% of a 20 mm sieve, 75-90% of a 13 mm sieve, 67-84% of a 10 mm sieve, 45-65% of a 5 mm sieve, 35-50% of a 2.5 mm sieve, 18-30% of a 0.6 mm sieve, 10-21% of a 0.3 mm sieve, 6-16% of a 0.15 mm sieve, and 4-8% of a 0.08 mm sieve, based on a weight percentage passing through the sieve of WC-4 particle size.

The aggregates of the present disclosure may be 90-100% of a 20 mm sieve, 69-84% of a 13 mm sieve, 56-74% of a 10 mm sieve, 35-55% of a 5 mm sieve, 23-38% of a 2.5 mm sieve, 10-23% of a 0.6 mm sieve, 5-16% of a 0.3 mm sieve, 3-12% of a 0.15 mm sieve, and 2-10% of a 0.08 mm sieve, based on a weight percentage passing through the sieve of WC-5 particle size.

The aggregates of the present disclosure may be 90-100% of a 13 mm sieve, 73-90% of a 10 mm sieve, 40-60% of a 5 mm sieve, 25-40% of a 2.5 mm sieve, 11-22% of a 0.6 mm sieve, 7-160 of a 0.3 mm sieve, 4-12% of a 0.15 mm sieve, and 3-9% of a 0.08 mm sieve, based on a weight percentage passing through the sieve of WC-6 particle size.

The aggregates of the present disclosure may be 90-100% of a 20 mm sieve, 45-85% of a 13 mm sieve, 27-73% of a 10 mm sieve, 5-40% of a 5 mm sieve, 5-32% of a 2.5 mm sieve, 5-32% of a 0.6 mm sieve, 5-32% of a 0.3 mm sieve, 5-32% of a 0.15 mm sieve, and 1-15% of a 0.8 mm sieve, based on a weight percentage passing through the sieve of low noise drainage pavement.

The aggregates of the present disclosure may be 85-100% of a 13 mm sieve, 57-92% of a 10 mm sieve, 5-43% of a 5 mm sieve, 5-32% of a 2.5 mm sieve, 5-32% of a 0.6 mm sieve, 5-32% of a 0.3 mm sieve, 5-32% of a 0.15 mm sieve, and 1-15% of a 0.08 mm sieve, based on a weight percentage passing through the sieve of low noise drainage pavement.

The aggregates of the present disclosure may be 76-100% of a 8 mm sieve, 21-76% of a 5 mm sieve, 5-42% of a 2.5 mm sieve, 2-21% of a 0.6 mm sieve, 1-20% of a 0.3 mm sieve, 1-19% of a 0.15 mm sieve, and 1-16% of a 0.08 mm sieve, based on a weight percentage passing through the sieve of low noise drainage pavement.

The aggregates of the present disclosure may be 70-100% of a 5 mm sieve, 10-63% of a 2.5 mm sieve, 6-31% of a 0.3 mm sieve, and 1-17% of a 0.08 mm sieve, based on a weight percentage passing through the sieve of low noise drainage pavement.

The aggregates of the present disclosure may be 80-100% of a 13mm sieve, 40-95% of a 10 mm sieve, 20-70% of a 5 mm sieve, 10-60% of a 2.5 mm sieve, 5-35% of a 1.2 mm sieve, 3-32% of a 0.3 mm sieve, and 1-25% of a 0.08 mm sieve, based on a weight percentage passing through the sieve of 13 mm low noise dense-graded pavement.

The aggregates of the present disclosure may be 85-100% of a 10 mm sieve, 25-70% of a 5 mm sieve, 10-50% of a 2.5 mm sieve, 5-25% of a 1.2 mm sieve, 2-20% of a 0.3 mm sieve, and 1-15% of a 0.08 mm sieve, based on a weight percentage passing through the sieve of 10 mm low noise dense-graded pavement.

The aggregates of the present disclosure may be 85-100% of a 5 mm sieve, 65-85% of a 2.5 mm sieve, 5-25% of a 1.2 mm sieve, 15-35% of a 0.3 mm sieve, and 4-13% of a 0.08 mm sieve, based on a weight percentage passing through the sieve of 5 mm low noise dense-graded pavement.

In addition, in an exemplary embodiment of the present disclosure, the aggregates may include 0.0001 to 100 wt% of a recycled aggregate, in which the recycled aggregate refers to a recycled aggregate obtained by crushing waste asphalt concrete which occurs at the site of cutting or repairing old asphalt concrete pavement and classifying the size according to the use.

A filling material in the present disclosure may refer to a filler such as lime ash, slaked lime, and recovered dust.

The present disclosure provides a construction method of asphalt pavement using the asphalt mixture described above. Asphalt pavement is constructed with paving equipment and compaction equipment after an asphalt concrete mixture of straight asphalt with aggregates, fillers, and the like is produced in a plant and then transported to the site.

An exemplary embodiment of the present disclosure provides a construction method of asphalt pavement including: A) producing an asphalt mixture; B) transporting the asphalt mixture; C) paving the asphalt mixture; and D) compacting an asphalt pavement layer.

The compacting may include compacting in multiple stages at different temperatures.

The compacting of the construction method of asphalt pavement may include first compacting at 100±10°C, second compacting at 90±10°C, and third compacting at 80±10°C of the pavement layer.

Specifically, the construction method of asphalt pavement of the present disclosure includes: A) producing an asphalt mixture at 110±10°C; B) transporting the asphalt mixture at 110±10°C; C) paving the asphalt mixture at 110±10°C; and D) first compacting (macadam roller) an asphalt pavement layer at 110±10°C; E) second compacting (tire roller) the asphalt pavement layer at 90±10°C; and F) third compacting (tandem roller) the asphalt pavement layer at 80±10°C.

### Preparation Example 1: Preparation of asphalt modifier and modified asphalt binder according to the present disclosure

<Example 1> 45 wt% of polystyrene-polybutadiene-polystyrene block copolymer (SBS) powder which was crushed to a size of 0.1 to 1 mm, 45 wt% of composite process oil (GTR R10) in which 75 parts by weight of paraffin oil and 25 parts by weight of liquid polybutadiene were mixed, 5 wt% of a rosin resin tackifier modified by an aliphatic hydrocarbon (Kolon P-120HS), 4.97 wt% of a polymer-silica nanocomposite (15 wt% of bentonite, 83 wt% of nanosilica fume (Chemicon Co., Ltd, Sioxid), and 2 wt% of SAP (LG Chem)), and 0.03 wt% of an asphalt deodorant (Hansoo Road Ind., Asmell Cut) were mixed at a low temperature to prepare a medium-low temperature asphalt modifier. 14 parts by weight of the asphalt modifier prepared above and 86 parts by weight of straight asphalt (PG 64-22) were mixed to prepare a modified asphalt binder.

The results of testing the penetration, the elongation, the elastic recovery rate, and the softening point of the modified asphalt binder using the modified asphalt binder are listed in Table 1.

### <Comparative Example 1>

The physical properties were evaluated in the same manner as in Example 1, except that 2 parts by weight of EOC-200 WMA as an asphalt modifier and 98 parts by weight of straight asphalt (PG 64-22) were mixed to prepare a modified asphalt binder. The results are listed in Table 1.

### <Comparative Example 2>

The results of testing the penetration, the elongation, the elastic recovery rate, and the softening point of the asphalt binder using the asphalt binder of 100 parts by weight of straight asphalt (PG 64-22) without the use of the asphalt modifier are listed in Table 1.

**[Table 1]**

| Item | | Unit | Example 1 | Comparative Example 1 | Comparative Example 2 | Test method |
|---|---|---|---|---|---|---|
| Penetration | | 1/10 mm | 48 | 68 | 68 | KS M 2252 |
| Elongation | 15°C | cm | 140 | 120 | 125 | KS M 2254 |
| | 5°C | | 78 | 28 | 34 | KS M 2254 |
| Softening point | | °C | 83 | 52 | 48 | KS M 2250 |
| Elastic recovery rate | % | 87 | 42 | 40 | KS M 2254 | |

As a result of testing the penetration and the softening point in Example 1, it was found that they exceeded the modified asphalt quality standards of the Ministry of Land, Infrastructure, and Transport.

In particular, in Example 1, the low softening point of the asphalt binder which was the biggest problem of the conventional asphalt was improved to 80°C or higher, and the elongation property at a low temperature was 78 cm or more, which shows that it is effective for improving low temperature crack resistance. Comparative Example 1 was not significantly different from Comparative Example 2 in terms of the effect.

The elastic recovery rate of the asphalt binder is the most important characteristic of the road pavement subjected to repeated loads, and it is recommended in Korea and USA that the value is at least 60% or more. It was confirmed that Example 1 had the recovery rate of 85% or more, and Comparative Examples 1 and 2 showed a low value of the elastic recovery rate of about 40%.

### <Example 2> Preparation of asphalt mixture

The medium-low temperature asphalt modifier of Example 1, straight asphalt (Exxon Mobile PG 64-22), an aggregate (aggregate of the specification in Table 2), and slaked lime as a filling material were mixed at a weight composition ratio described in the following Table 3, and mixed at 160°C, 140°C, 120°C, and 100°C to prepare an asphalt mixture. The mixture was used to measure the dynamic properties and listed in Table 4, and a carbon dioxide reduced amount is listed in Table 5, and deodorizing properties are listed in Table 6.

**[Table 2]**

| | | | | | |
|---|---|---|---|---|---|
| Particle size standard (mm) of aggregate | 13.0 | 5.0 | 2.5 | 0.3 | 0.08 |
| Particle size range (%) | 100 | 90-100 | 35-50 | 15-25 | 8-13 |
| Medium particle size (%) | 100.0 | 95.0 | 42.5 | 20.0 | 10.5 |

### <Comparative Example 3>

The asphalt mixture was prepared in the same manner as in Example 1 except that a medium temperature additive was mixed as the asphalt modifier at the composition ratio in the following Table 3. The dynamic properties are listed in Table 4, a carbon dioxide reduced amount is listed in Table 5, and deodorizing properties are listed in Table 6.

### <Comparative Example 4>

The process was performed in the same manner as in Example 1, except that no modifier was used. The results are listed in Table 4, a carbon dioxide reduced amount is listed in Table 5, and deodorizing properties are listed in Table 6.

**[Table 3]**

| Classification | | Composition ratio (wt%) | Example 2 | Comparative Example 3 | Comparative Example 4 |
|---|---|---|---|---|---|
| Straight asphalt | | 5∼10 | 5.30 | 5.97 | 6.00 |
| High-strength medium-low temperature asphalt mixture modifier | | 0.1∼10 | 0.70 | - | - |
| Medium temperature additive | | 0.01∼0.5 | - | 0.03 | - |
| Aggregate | | 78∼88 | 88.00 | 88.00 | 88.00 |
| Filling material | | 3∼18 | 6.00 | 6.00 | 6.00 |
| Production temperature (°C) | 160 | - | Produced | Produced | Produced |
| | 140 | | Produced | Produced | Produced |
| | 120 | | Produced | Produced | Produced |
| | 100 | | Produced | Produced | Produced |

**[Table 4]**

| Classifica tion | Compaction temperature | Unit | Example 2 | Comparative Example 3 | Comparative Example 4 | Test method |
|---|---|---|---|---|---|---|
| Marshall stability | 160°C | N | 15,120 | 10,230 | 8,870 | KS F 2337 |
| | 140°C | | 14,560 | 8,690 | 5,760 | |
| | 120°C | | 14,180 | 5,240 | 3,860 | |
| | 100°C | | 12,410 | 2,250 | 1,460 | |
| Porosity | 160°C | % | 4 | 5 | 5 | KS F 2364 |
| | 140°C | | 4 | 5 | 9 | |
| | 120°C | | 4 | 10 | 13 | |
| | 100°C | | 5 | 15 | 19 | |
| Indirect tensile strength | 160°C | MPa | 1.22 | 1.08 | 0.96 | KS F 2382 |
| | 140°C | | 1.14 | 1.01 | 0.77 | |
| | 120°C | | 1.13 | 0.86 | 0.42 | |
| | 100°C | | 1.09 | 0.65 | 0.33 | |
| Dynamic stability | 160°C | /mm | 5,890 | 1,220 | 670 | KS F 2374 |
| | 140°C | | 5,560 | 650 | 310 | |
| | 120°C | | 5,220 | 210 | - | |
| | 100°C | | 4,890 | - | - | |

The Marshall stability and the dynamic stability of Example 2 were shown to be 10,000 N and 4,000/mm or more, respectively, regardless of the production temperature of the asphalt mixture. This satisfies the asphalt quality standard of the Ministry of Land, Infrastructure and Transport.

In particular, in Example 2, the mixture was produced and the quality standard was secured even when the production temperature of the asphalt mixture was as low as 100°C.

Comparative Example 3 satisfied the quality standard of asphalt pavement in Korea at an asphalt mixture production temperature of 140°C, but the quality was greatly deteriorated at 120°C or lower. In Comparative Example 4, the quality was greatly deteriorated at an asphalt mixture production temperature of 140°C or lower, so that the Korean standard was not satisfied.

A trend similar to the above results was shown also in the test results of porosity and indirect tensile strength.

Table 5 shows the test results for energy consumption and carbon dioxide emission depending on the asphalt mixture production temperature.

**[Table 5]**

| Classification | | Unit | Example 2 | Comparative Example 3 | Comparative Example 4 | Test method |
|---|---|---|---|---|---|---|
| Carbon dioxide emission | 160°C | ppm/to n | 28 | 28 | 29 | Measurement using equipment (Optima 7, Daelimscience) |
| | 140°C | | 22 | 21 | 22 | |
| | 120°C | | 16 | 18 | 17 | |
| | 100°C | | 11 | 12 | 11 | |
| Energy usage | 160°C | litter /ton | 9.6 | 9.8 | 9.6 | Content of bunker seed oil consumed in production of 26 tons of asphalt mixture in 2 ton batch scale |
| | 140°C | | 7.4 | 7.3 | 7.7 | |
| | 120°C | | 5.6 | 5.8 | 5.5 | |
| | 100°C | | 3.7 | 3.8 | 3.7 | |

The energy usage shows that as the asphalt mixture production temperature was lowered in Example 2 and Comparative Examples 3 and 4, the carbon dioxide emission and energy consumption were greatly decreased.

As the asphalt mixture production temperature was lowered by 40 to 60°C, carbon dioxide emission and energy consumption were decreased by 40 to 60%. In particular, when the asphalt mixture production temperature was 120°C or lower, harmful gas including carbon dioxide and the like was greatly decreased, and the asphalt mixture production temperature was 120°C so that the energy conservation effect was expected.

Table 6 shows the results of testing harmful substance occurrence of the asphalt mixture depending on the asphalt mixture production temperature of Example 2 and Comparative Examples 3 and 4. The content of the harmful substances was measured by a gas chromatography method by applying the odor process test method, immediately after the asphalt mixture production, depending on each temperature.

**[Table 7]**

| Classification | | Unit | Example 2 | Comparative Example 3 | Comparative Example 4 | Test method |
|---|---|---|---|---|---|---|
| Hydrogen sulfide | 160°C | ppm | undetected | 0.06 | 0.08 | Odor process test method (ES09303.36) |
| | 140°C | | Undetected | 0.05 | 0.06 | |
| | 120°C | | Undetected | 0.05 | 0.05 | |
| | 100°C | | Undetected | 0.04 | 0.04 | |
| Acetaldehyde | 160°C | ppm | 0.01 | 0.03 | 0.03 | Odor process test method (ES09305.16) |
| | 140°C | | Undetected | 0.03 | 0.03 | |
| | 120°C | | Undetected | 0.02 | 0.02 | |
| | 100°C | | Undetected | 0.01 | 0.01 | |
| Butyraldehyde | 160°C | ppm | 0.001 | 0.007 | 0.008 | Odor process test method (ES09305.16) |
| | 140°C | | Undetected | 0.006 | 0.005 | |
| | 120°C | | Undetected | 0.004 | 0.004 | |
| | 100°C | | Undetected | 0.003 | 0.003 | |

As a result of the odor process test of Example 2, hydrogen sulfide was not detected regardless of the asphalt mixture production temperature, and thus, it was confirmed that the effect of removing asphalt odor of the high-strength medium-low temperature modifier was excellent. However, in Comparative Examples 3 and 4, hydrogen sulfide was detected at all temperatures regardless of the asphalt mixture production temperature.

In addition, in Example 2, harmful gas such as acetaldehyde and butyraldehyde was not detected at the asphalt mixture production temperature of 140°C or lower, but in Comparative Examples 3 and 4, the detected amount was decreased as the asphalt mixture production temperature was lowered, but the decrease was not large.

The asphalt modifier according to the present disclosure may remove 99% or more of the odor-causing substance which occurs during asphalt mixture production, and thus, it is expected that asphalt odor complaints are reduced by the environment around the asphalt plant and the asphalt pavement site and of the workers.

The medium-low temperature asphalt modifier of the present disclosure is used to lower a production temperature of an asphalt mixture by 40-60°C, and the asphalt mixture is produced at 120°C or lower, thereby implementing carbon neutrality through energy conservation and carbon dioxide emission suppression. In this case, a fuel reduction effect of 60% or more and a carbon dioxide emission reduction effect are shown.

When the medium-low temperature asphalt modifier of the present disclosure is used, an effect of removing 99% or more of an asphalt odor by decomposition, absorption, ion exchange, and a chemical reaction of causes of the asphalt odor and harmful substances such as hydrogen sulfide, methyl mercaptan, and acetaldehyde which occur in the production process of the asphalt mixture is shown.

The high-strength medium-low temperature asphalt modifier of the present disclosure may improve an asphalt binder having a commonality rating of 64-22 to that having a commonality rating of PG 76-22, and improve moisture resistance of asphalt which is problematic in low-temperature production to decrease aggregate release and wear on the surface of asphalt. In addition, the high-strength medium-low temperature asphalt modifier improves crack resistance at a low temperature and deformation resistance at a high temperature to increase asphalt pavement commonality.

## Claims

1. A medium-low temperature asphalt modifier comprising: i) a styrenic thermoplastic elastomer powder, ii) a composite process oil, iii) a rosin resin tackifier modified by an aliphatic hydrocarbon, iv) a polymer-silica nanocomposite, and v) an asphalt deodorant.

2. The medium-low temperature asphalt modifier of claim 1, wherein the styrenic thermoplastic elastomer powder is one or two or more selected from a polystyrene-polybutadiene-polystyrene block copolymer (SBS), a styrene-butadiene rubber (SBR), a styrene-isoprene-styrene block copolymer (SIS), a styrene-ethylene-butylene-styrene block copolymer (SEBS), and a styrenic thermoplastic elastomer (STE).

3. The medium-low temperature asphalt modifier of claim 1, wherein asphalt modifier includes: i) 30 to 60 wt% of the styrenic thermoplastic elastomer powder, ii) 40 to 60 wt% of the composite process oil, iii) 5 to 20 wt% of the rosin resin modified by an aliphatic hydrocarbon as a tackifier, iv) 0.2 to 5 wt% of the polymer-silica nanocomposite, and v) 0.01 to 0.5 wt% of the asphalt deodorant with respect to 100 wt% of the total medium-low temperature asphalt modifier.

4. The medium-low temperature asphalt modifier of claim 1 or 2, wherein the polymer-silica nanocomposite includes 10 to 20 wt% of nanoclay; 75 to 88 wt% of nanosilica fume, and 2 to 5 wt% of a super absorbent polymer (SAPP).

5. The medium-low temperature asphalt modifier of claim 1, wherein the asphalt deodorant includes: 10 to 30 wt% of an essential oil; 20 to 40 wt% of an essential oil having ion exchange and reactivity; 20 to 40 wt% of a carrier oil; and 30 to 40 wt% of a composite process oil.

6. The medium-low temperature asphalt modifier of claim 1, wherein the composite process oil is prepared by mixing 5 to 20 parts by weight of polybutene or polyisoprene liquid polymer with respect to 100 parts by weight of the process oil.

7. An asphalt mixture comprising:
i) 80 to 96.9 wt% of aggregates;
ii) 3 to 10 wt% of asphalt; and
iii) 0.1 to 10 wt% of the medium-low temperature asphalt modifier of claim 1.

8. The asphalt mixture of claim 7, wherein when prepared in a range of 110°C±15°C, the asphalt mixture reduces carbon emission by 60% or more as compared with an asphalt mixture which does not include the high-strength medium-low temperature asphalt modifier of claim 1 or 2.

9. The asphalt mixture of claim 7, wherein the aggregates include 0.0001 to 100 wt% of a recycled aggregate.

10. A construction method of asphalt pavement, the method comprising:
A) producing an asphalt mixture;
B) transporting the asphalt mixture;
C) paving the asphalt mixture; and
D) compacting an asphalt pavement layer.

11. The construction method of asphalt pavement of claim 10, wherein the asphalt mixture is produced at 110±10°C.

12. The construction method of asphalt pavement of claim 10, wherein the compacting is compacting in multiple stages at different temperatures.

13. The construction method of asphalt pavement of claim 12, wherein the compacting includes first compacting at 100±10°C; second compacting at 90±10°C; and third compacting at 80±10°C.
